# EUROPEAN PATENT APPLICATION

(11) **EP 0 525 529 A1**
(43) Date of publication of application: **03.02.1993**
(21) Application number: 92112156.2
(22) Date of filing: 16.07.1992
(51) Int. Cl.: F16K 31/66

(54) **Multiway valve, in particular for refrigerating circuits**

(30) Priority: 30.07.1991 IT PN910053
(71) Applicant: Italset s.r.l., I-15033 Casale Monferrato (AL) (IT)
(72) Inventor: Fornasari, Paolo, I-33084 Cordenons, Pordenone (IT)
(74) Representative: Spandonari, Carlo, Dr. Ing.

(57) **Abstract**

Multiway valve for controlling the flow of gases, capable of being used in particular in the refrigerant circuits of household-type refrigerating equipment.

The valve (10) makes use of a PTC element (29) as the active element, as well as a magnet (26) along with a plate (31) of thermoferrite material, to actuate the shutting member (18) in opposition to the biasing action of a return spring (21).

Said valve is more reliable, is more compact in its size and costs less to build and install.

## Description

The present invention relates to a multiway valve for controlling the flow of gases, capable of being used in particular in the refrigerant circuits of household-type refrigerating equipment.

Refrigeration appliances are currently being increasingly used, which are provided with two or even more separate compartments, such as for instance a storage compartment for storing food at a temperature by a few degrees above zero and a freezer compartment for deep-freezing food at temperatures that may be as low as -24 °C. These appliances may be provided with two or more separate refrigerant circuits, ie. a circuit for each food compartment of the appliance. In all such cases, however, there is a quite noticeable increase in both structural complication and related manufacturing costs.

As a consequence, a more widely preferred solution appears to be the one which calls for the utilization of a single refrigerating circuit, whereas a multiway valve is appropriately added to this circuit so as to deliver the refrigerant fluid to each evaporator in each one of the various food storage compartments of the appliance in a selective way, depending on the temperatures that are to be kept in the same compartments as controlled by the respective thermostats.

The valves that are currently used to this purpose are generally two-way or three-way valves which are usually controlled using two different, alternative systems.

The first one of these systems is an electromagnetically operating one and comprises an electric coil which, when energized, generates a magnetic field that influences the shutting member of the valve so as to cause it to accordingly open or shut, respectively, the flow passages to the different conduits of refrigerant fluid that lead to the individual evaporators.

This solution, however, has again a major drawback in that the valve cannot be embedded, as it would be appropriate from a manufacturing point of view, in the thermal insulation layer of the cabinet of the refrigeration appliance, since the valve coil is more or less prone to failure and, as such, must therefore be mounted in such a way as to ensure it can be reached anytime for repair or replacement.

The second one of the above cited systems makes on the contrary use of a PTC (positive temperature coefficient) element associated with a capsule-like enclosure containing an amount of special wax which is capable of expanding and shrinking according to changes in the temperature and can therefore, through a sealing arrangement, perform the required valve function in much a similar way as the previously described one.

In this case, however, problems arise in connection with the tightness of said capsule-like vessel containing the wax, to such an extent that they may actually lead to a poor reliability of the valve. Furthermore, this solution is clearly more complicated from a structural point of view and it, too, has a serious drawback in that it cannot be embedded in the thermal insulation layer of the refrigerator cabinet.

It is therefore the purpose of the present invention to provide a valve which is capable of overcoming all of the drawbacks typical of the currently used solutions, so as to ensure uttermost reliability as well as very reduced costs and dimensions as compared with the currently used arrangements.

According to the invention, such an aim is reached in a valve which still makes use of a PTC element as an active element, while however employing a magnetic device, instead of the more usual mechanical components, to transfer the actuating action to the shutting member of the valve.

The valve according to the present invention is substantially provided with the features as described in the appended claims. However, to allow for a clearer understanding of the scope, the advantages and the features of the present invention, the latter will be further described below, by way of non-limiting example, with reference to the accompanying drawings in which:
- Figure 1 is the schematical view of a cross- section of a valve according to the invention, as shown in an operational condition;
- Figure 2 is a view through a partially sectioned valve according to the present invention, as shown in another operational condition;
- Figure 3 is a view of the section along the III-III line of Figure 1.

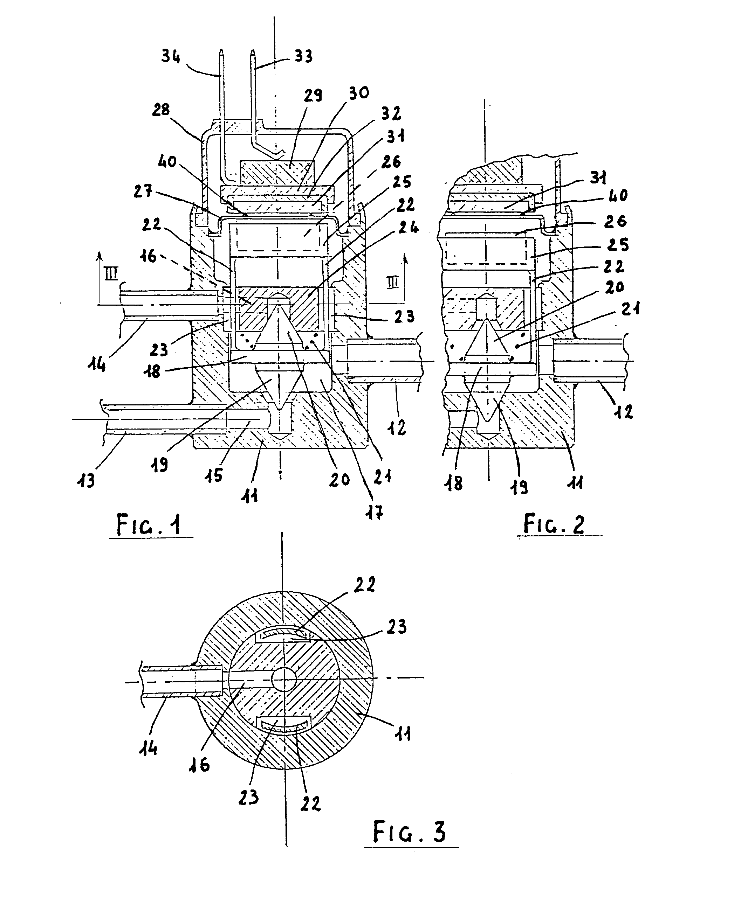

The valve according to the present invention consists substantially (see Figure 1) of a body 11 which the conduit 12 delivering the refrigerant fluid, and coming from the compressor, is soldered to along with the discharge conduits 13 and 14 supplying the refrigerant fluid to respective evaporators housed in the separate storage compartments of the refrigeration appliance.

In said body 11 of the valve, in correspondence of the inlet ports of said conduits 13 and 14, flow passages 15 and 16 are respectively provided to ensure connection with the inner chamber 17 of the valve, into which the refrigerant fluid actually flows from the conduit 12.

Said chamber 17 also accomodates the shutting member 18 of the valve, which can be noticed as having two conical end portions 19 and 20 axially opposing each other and so arranged as being capable of alternatively opening and shutting the inlet ports of said flow passages 15 and 16. Said shutting member 18 is biased by a compression spring 21 which tends to push the same shutting member into the position shown in Figure 2 whenever said shutting member is not affected by the afore cited magnetic action, as it will be described in the following.

According to the invention, such a shutting member 18 is rigidly connected by means of at least two arms 22 (see Figures 1 and 3), which are led to pass through corresponding apertures 23 provided in a partition wall 24 that is located inside the body 11 and in which the flow passage 16 connected with the discharge conduit 14 of the refrigerant fluid is provided, with a supporting member 25 to which a magnet 26 is attached. This magnet 26, in the operational position of the valve as shown in Figure 1, ie. with the conical end portion 20 of the shutting member 18 shifted to shut the conduit 16, is practically in contact with a cap 27 of paramagnetic material, which tightly closes, for instance by means of welding or soldering, the body 11.

To this body 11 of the valve, a supporting container 28 is then attached, for instance by means of seam folding or similar process, in which a PTC element 29 is mounted in such a way as to be associated with a heat-sink arrangement 30, preferably made in aluminium or magnesium alloy.

Said heat-sink arrangement 30 is in turn associated with a plate 31, with a backup provision 32 of electric insulating material being interposed therebetween. Said plate 31 is made of a thermomagnetic material, such as for instance a nickel- iron alloy or a powder-metal alloy with a very precisely defined "Curie temperature", and is arranged at a very short distance from that surface of the cap 27 which is opposed to the one turned toward the inner side of the valve body 11 and, as a consequence, the movable shutting member 18.

In a preferred way, the surface of the cap 27 is provided with a plurality of slightly projecting spacing members 40 which are provided for the surface of the plate 31 to abut against. The purpose of said spacing members 40 is to prevent the heat from the PTC 29/heat-sink arrangement 30/thermoferrite 31 assembly from being transferred on to the inner side of the valve body 11, through which the refrigerant fluid actually flows.

The PTC element 29 and the heat-sink arrangement 30 are finally connected to the power supply terminals 33 and 34, respectively.

Under normal conditions, the valve according to the invention has the configuration shown in Figure 1. Being there no power supply at the terminals 33 and 34, the PTC element 29 is cold; the same applies to the heat-sink arrangement 30 and the plate 31, which therefore are cold too. Between said plate 31 and the magnet 26, a magnetic attraction develops that is instrumental in keeping the magnet 26 in contact with the cap 27, so that, as a consequence, the conical end portion 20 of the shutting member 18 is shifted to close the flow passage 16.

Under these circumstances, therefore, the refrigerant fluid flowing from the conduit 12 passes through the chamber 17 and flows further along the conduit 15 towards the discharge conduit 13.

When on the contrary the power supply terminals 33 and 34 are energized, the PTC element 29 heats up rapidly and transfers heat to the heat-sink arrangement 30, which in turn heats up the thermoferrite plate 31. The latter turns then into paramagnetic and, as a consequence, is no longer affected by the magnetic action of the magnet 26, which is shifted back by the spring 21 along with the shutting member 18 so that the latter is moved into the position shown in Figure 2.

The presence of the spring 21 is to be preferred in that it ensures a positive control means to command the shift-back action of the valve shutting means 18. However, its use could be omitted if the valve is mounted with its axis running vertically, in which case the magnet 26 and the shutting member 18 would be in such a position as to be able to shift back by the effect of gravity each time that the magnetic action between the thermoferrite plate 31 and the magnet 26 drops.

Anyway, said shift-back movement of the valve shutting member 18 causes the flow passage 16 to be opened and the flow passage 15 to be closed, so that the refrigerant fluid is in turn caused to flow toward the discharge conduit 14.

In conclusion it can be affirmed that the valve according to the present invention ensures the utmost operating reliability, since it reduces the number of moving mechanical elements to a minimum and uses a PTC element as the active element; it further is quite compact in its structure and has a perfectly tight construction, so that it can be freely embedded in the thermal insulating layer of the refrigerator cabinet. Its cost, finally, is distinctly low as compared to other solutions.

The afore described valve is a three-way valve. However, anyone skilled in the art will readily appreciate that, through a simple adaptation of its shutting member 18, said valve can be converted into a two-way, four-way or multiple-way valve without departing from the scopes of the invention.

## Claims

1. Multiway valve, particularly for use in refrigerating circuits, comprising a body (11), to which a delivery conduit (12) and at least a discharge conduit (13, 14) of the refrigerant fluid are connected, a shutting member (18) that is adapted to be shifted inside said body (11), and means adapted to alternatively shift said shutting member into different operating positions, characterized in that said shutting member (18) is rigidly connected with a magnet (26), which is faced by a plate (31) of thermoferrite material that is associated with a PTC element (29), a magnetic action being exerted between said magnet, said thermoferrite plate and said PTC element so as to shift said shutting member into said operating positions.

2. Multiway valve according to claim 1, characterized in that a heat-sink arrangement (30) is provided between said PTC element (29) and said plate (31) of thermoferrite material.

3. Multiway valve according to claim 1 or 2, characterized in that a return spring (21) is associated to said shutting member (18).

4. Multiway valve according to any of the preceding claims, characterized in that said shutting member (18) is connected with the magnet (26) through rigid arms (22) passing through apertures (23) provided in a partition wall (24) inside said valve body (11).

5. Multiway valve according to any of the preceding claims, characterized in that an inner chamber of said valve body (11) is closed by a cap (27) whose opposite surfaces are faced by the magnet (26) and the plate (31) of thermoferrite material, respectively, the surface of the cap (27) that faces the thermoferrite plate (31) being provided with slightly projecting spacing members (40).

6. Multiway valve according to any of the preceding claims, characterized in that the PTC element (29), the heat-sink arrangement (30) and the thermoferrite plate (31) are enclosed in a container (28), which in turn is attached in a tightly sealed way to the valve body (11), thereby allowing the whole valve to be made in a single-piece structure.
